Europäisches Patentamt

(19) European Patent Office

Office européen des brevets

(11) Numéro de publication : **0 288 330 B1**

(12) **FASCICULE DE BREVET EUROPEEN**

(51) Int. Cl.⁵ : **G01F 1/38, G01F 15/14, G21C 17/02**

(45) Date de publication du fascicule du brevet :
25.09.91 Bulletin 91/39

(21) Numéro de dépôt : **88400351.8**

(22) Date de dépôt : **17.02.88**

(54) **Débitmètre pour liquides dangereux.**

(30) Priorité : **20.02.87 FR 8702277**

(43) Date de publication de la demande :
**26.10.88 Bulletin 88/43**

(45) Mention de la délivrance du brevet :
**25.09.91 Bulletin 91/39**

(84) Etats contractants désignés :
**BE DE ES GB IT NL SE**

(56) Documents cités :
**DE-A- 1 498 326**
**DE-A- 2 305 743**
**DE-A- 3 430 835**
**FR-A- 2 403 546**
**GB-A- 905 502**
**US-A- 4 297 899**

(73) Titulaire : **SOCIETE GENERALE POUR LES TECHNIQUES NOUVELLES S.G.N. Société anonyme dite:**
**1, rue des Hérons Montigny-le-Bretonneux**
**F-78184 Saint-Quentin-en-Yvelines Cédex (FR)**

(72) Inventeur : **Dollfus, Jacques**
**55 Parc des Essarts**
**F-78 690 Les Essarts le Roi (FR)**

(74) Mandataire : **Le Roux, Martine et al**
**Cabinet Beau de Loménie 55, rue d'Amsterdam**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La mesure du débit d'un liquide dangereux circulant dans une canalisation est un problème rendu difficile par les exigences de sûreté.

En particulier, quand on opère sur un liquide radioactif, il faut éviter tout risque de contamination par une fuite quelconque. On peut accepter de ne plus pouvoir mesurer le débit en cas de preuve ou d'accident sur le débitmètre, mais il est impératif de conserver sans fuite la circulation du liquide.

Il existe de nombreux débitmètres extérieurs au circuit :

Débitmètre à effet Coriolis, débitmètre à conductibilité électrique.

Les exigences précédentes rendent difficile l'usage de la plupart des débitmètres connus (par exemple : déviation de palette) par suite de la nécessité de sorties d'axe, de connexions, etc.

Il existe des principes de mesures complètement extérieures :

par conductibilité électrique mais ne s'appliquant pas à tous les liquides,

par effet Coriolis, avec une large gamme d'application mais une sensibilité très grande aux vibrations extérieures et la nécessité d'avoir la détection au contact direct de la tuyauterie, sans possibilité de blindage, abrègent par trop la durée de vie. Le rayonnement (bêta et gamma) issu d'un liquide fortement radioactif détruit rapidement un appareillage non protégé.

La présente invention concerne un débitmètre fixé aux tuyauteries, parcouru par le liquide dont on veut connaître le débit, sans pièce mécanique avec sorties d'arbres, et tel qu'une panne n'ait pas d'influence sur la circulation du liquide. On peut au pire avec cette invention ne plus pouvoir mesurer le débit mais la circulation du liquide ne s'interrompt pas. Un autre aspect de l'invention est la conception de l'appareil telle que la partie opérationnelle de l'appareil puisse être extraite sans danger et sans interrompre le circuit. En particulier, les capteurs donnant la mesure sont changeables sans interrompre la circulation du liquide et sans risque d'irradiation pour le personnel procédant à l'échange.

Le principe mis en oeuvre pour la mesure consiste à faire subir une perte de charge au liquide, à mesurer cette perte de charge par déformation d'une membrane et à capter extérieurement les déplacements d'une masse magnétique liée à la membrane.

L'invention concerne donc un débitmètre pour liquides dangereux, utilisant la déformation sous l'influence d'une différence de pression provoquée par l'écoulement dudit liquide, d'une membrane déformable, ledit débitmètre étant placé sous une dalle de protection et caractérisé en ce que :

— il comporte un corps de forme générale cylindrique placé dans un bol muni d'un piquage inférieur d'amenée et d'un piquage supérieur de sortie dudit liquide, ledit corps comportant un orifice calibré à sa face inférieure, un orifice de sortie dans sa partie latérale supérieure, ladite membrane étant métallique et disposée à la partie supérieure dudit corps au-dessus dudit piquage supérieur et un segment métallique assurant l'étanchéité entre ledit corps et ledit bol, à un niveau situé entre lesdits piquages inférieur et supérieur,

— il comporte une aiguille creuse solidaire de façon étanche de ladite membrane sortant en partie basse à travers ledit orifice calibré et munie d'un orifice situé en dessus de ladite membrane métallique, ladite aiguille creuse se prolongeant vers le haut dans un dispositif permettant la mesure du déplacement de ladite aiguille, donc de la déformation de ladite membrane métallique.

Le principe mis en oeuvre pour la conception mécanique consiste à utiliser un bol extérieur fixé aux tuyauteries dans lequel est placé l'ensemble du dispositif de mesure tel qu'il puisse être extrait par le haut à travers la dalle de protection. Le bol restant en place assure la continuité du circuit. La description qui suit permettra, en se reportant aux figures, de mieux comprendre l'invention.

La figure 1 représente une coupe axiale d'un débitmètre en place sous une dalle dans une cellule. La dalle est horizontale et l'axe du débitmètre est vertical. La zone marquée a est donc la zone basse du débitmètre.

La figure 2 représente une coupe agrandie du détail de l'orifice calibré repéré 10 dans un autre mode de réalisation.

## DESCRIPTION

Dans une cellule située sous une dalle épaisse 5, on place sous la dalle un bol 3 de forme générale cylindrique avec un fond bombé.

Le bol porte trois piquages latéraux :

le liquide dont on veut mesurer le débit entre par le piquage 6 et sort par le piquage 7,

un piquage 8 sert à ventiler l'appareil et éventuellement à collecter les fuites. Les tuyauteries correspondantes sont soudées sur lesdits piquages. La dalle comporte une ouverture correspondant à l'ouverture supérieure du bol.

Dans le bol est placé le corps 9 du débitmètre ayant la forme d'une boîte cylindrique surmontée d'un chapeau 25 et comportant une portée plane comprimant le joint 13 pour faire étanchéité.

Le corps 9 comporte un orifice calibré 10 à sa partie inférieure et un orifice latéral 11.

Le corps comprend deux cloisons horizontales :

une grille perforée 15,

une membrane métallique 16 fixée d'une manière étanche sur la paroi interne du corps.

Dans l'axe de l'appareil, un tube 17 appelé aiguille coulisse avec jeu dans l'orifice 10 et dans le trou central 31 de la grille. Par contre, la membrane métallique est fixée à la paroi externe de l'aiguille (sur un petit épaulement de renfort). La partie haute 23 de l'aiguille est pleine, à l'exception d'une zone creusée pour recevoir une masse magnétique 22.

Sur la partie supérieure du corps et autour du chapeau 25, est fixé un capot de protection 24 lui-même surmonté d'un bouchon 28. Ledit bouchon constitué de fonte, de plomb, d'acier (ou d'une combinaison) assure la protection biologique à l'emplacement troué de la dalle. Une série de pattes 29 (une seule figurée) maintient le bouchon en place. Des anneaux de levage 30 (un seul figuré) permettent d'enlever le bouchon.

Dans le capot 24, autour du chapeau 25, est placée une série de bobinages dont les fils sortent par le presse-étoupe 27. Les fuites éventuelles sont collectées par la gorge circulaire 32 et envoyées par le canal 12 à l'ajutage 8.

Les jeux entre les pièces ont été volontairement grossis sur la figure pour faciliter la compréhension. Entre le bol et le corps, un segment métallique 14 (simple ou multiple) assure l'étanchéité.

Pour donner une force de rappel et en même temps centrer l'aiguille, une série de rayons 21 réunit souplement l'embase de l'aiguille et le bas du corps du débitmètre.

On note également que le liquide de la zone "a" peut pénétrer dans l'aiguille par l'orifice bas 19 et ressortir en zone "d" par l'orifice 20. On voit donc que l'intérieur de l'appareil comprend quatre zones :

zone a : liquide arrivant, pression $P_o$ dite amont

zone b : liquide ayant traversé l'orifice calibré en subissant une perte de charge p, donc à la pression $P_o - p$

zone c : liquide ayant traversé la grille perforée où les trous sont assez gros pour rendre négligeable une perte de charge

zone d : liquide passant par l'aiguille, sans débit donc à la pression régnant en a, c'est-à-dire $P_o$.

## FONCTIONNEMENT

La membrane, placée entre "c" et "d" est donc soumise à la différence de pression $P_o - (P_o - p) = p$. Or, p n'est fonction, pour un liquide donné à température constante, que du débit Q traversant l'orifice calibré 10; la déformation de la membrane, ou ce qui revient au même le déplacement y de l'aiguille, n'est fonction que de p ; il s'ensuit que y n'est fonction que du débit Q.

Le déplacement de l'aiguille (donc de la masse aimantée 22) est capté par les trois bobines 26). Nous ne décrivons pas ce genre de capteur connu par ailleurs, qui donne y avec une grande sensibilité (par exemple on mesure un déplacement au micron près).

On voit donc qu'il est facile d'étalonner l'appareil pour que la lecture de y donne la valeur de Q correspondante.

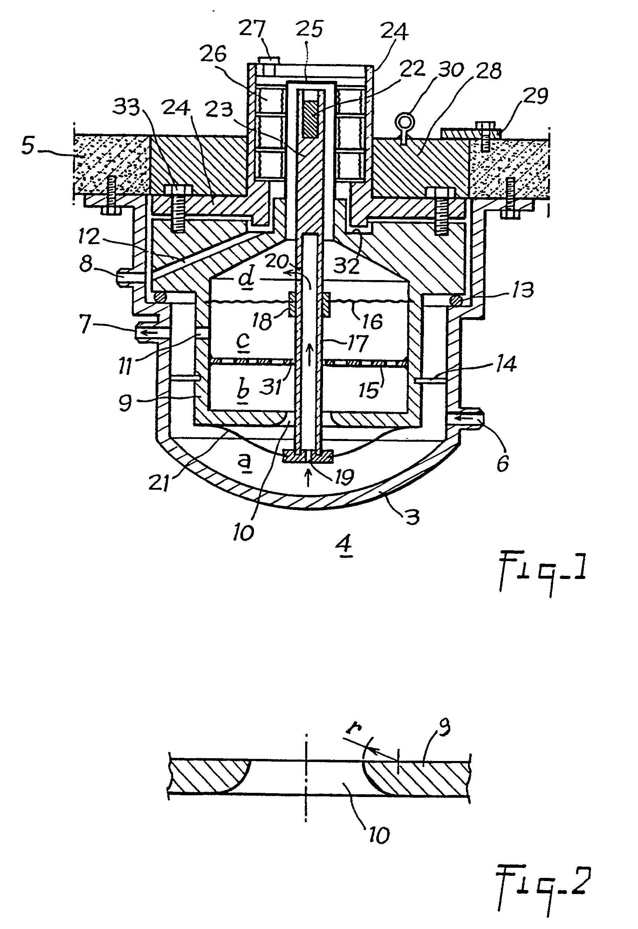

Pour un meilleur fonctionnement, il est avantageux de donner à l'orifice calibré 10 la forme représentée sur la figure 2 : la surface de l'orifice est une surface torique. Si l'appareil est interposé sur une tuyauterie, on peut connaître le débit liquide instantané dans cette tuyauterie. L'élément le plus fragile du débitmètre, objet de l'invention, est la membrane.

Une rupture de membrane, par exemple à la suite d'une attaque par corrosion ou par un à-coup brutal de pression, est un accident fréquent sur les débitmètres. Quand on opère sur un liquide radioactif, la rupture de membrane sur un débitmètre classique a pour effet d'obliger à arrêter très rapidement le débit de liquide pour éviter de contaminer une zone importante.

Dans le débitmètre objet de l'invention, une rupture de membrane n'a qu'une conséquence : perdre la mesure. Par contre, la continuité du circuit est assurée et aucune perte de liquide n'est à craindre. Il n'est même pas nécessaire de prévoir des vannes en amont et en aval du débitmètre.

## DEMONTAGE

En cas de mauvais fonctionnement, après rinçage par circulation d'eau (pure ou acide par exemple), on place sur la dalle, autour de l'orifice, une enceinte de protection (telle que décrite dans la demande de brevet français 8403312 publiée sous le n° 2560710) puis on débloque les fixations 29 et enlève par les oreilles 30 le bouchon 28.

On enlève ensuite le capot 24 (après avoir défait les vis d'assemblage 33). On peut vérifier le fonctionnement des capteurs 26 et éventuellement procéder à leur remplacement.

Si l'intervention porte sur le corps proprement dit (sans doute dans ce cas sur la membrane), on remplace les vis 33 par des anneaux et on soulève le corps qui peut être évacué par l'inceinte de protection vers un atelier de maintenance, ou même remplacé par un corps neuf.

## DETAILS DE CONCEPTION

Membrane : on a intérêt à prévoir une membrane prédéformée par des ondes circulaires pour augmenter la précision de la mesure.

Grille perforée : son rôle est principalement d'éviter que le jet liquide issu de l'orifice calibré n'atteigne la membrane avec une vitesse trop grande et ne la déforme dynamiquement.

## EXEMPLE DE REALISATION

Dans un bol en acier inoxydable de diamètre 200 mm, on place un corps de diamètre intérieur 130 mm, de même composition.

La membrane est en zircalloy ondulée, diamètre utile 120 mm, fixée par sertissage sur la paroi interne du bol.

L'épaisseur de la membrane est de 0,5 mm.

L'orifice calibré a un diamètre variant de 32 à 52 en suivant une forme circulaire de rayon 10 mm (figure 2).

Le joint d'étanchéité est un joint Helicoflex (Cefilac) en acier inoxydable, de diamètre de l'ordre de 5 mm.

La grille perforée a une épaisseur de 10 mm et est percée de trois séries de trous de diamètre 8 mm placés sur des cercles concentriques.

L'aiguille est maintenue à sa partie basse (c'est-à-dire dans la zone"a") par six rayons de diamètre 0,5 mm en acier inoxydable, précambrés pour permettre l'allongement. Le diamètre extérieur de l'aiguille est égal à 16 mm et le diamètre intérieur à 8 mm.

On voit que le passage libre dans l'orifice calibré est d'environ 6 cm$^2$, ce qui amène à une perte de charge de 1 m d'eau, soit 100 mbar pour un débit de 10 m$^3$/h.

La force agissant sur la membrane pour une différence de pression de 100 mbar est proche de 150 N et produit un déplacement de l'aiguille de 10 mm.

## Revendications

1. Débitmètre pour liquides dangereux, utilisant la déformation sous l'influence d'une différence de pression provoquée par l'écoulement dudit liquide, d'une membrane (16) déformable, ledit débitmètre étant placé sous une dalle (5) de protection et caractérisé en ce que :
   — il comporte un corps (9) de forme générale cylindrique placé dans un bol (3) muni d'un piquage inférieur (6) d'amenée et d'un piquage supérieur (7) de sortie dudit liquide, ledit corps (9) comportant un orifice calibré (10) à sa face inférieure, un orifice de sortie (11) dans sa partie latérale supérieure, ladite membrane (16) étant métallique et disposée à la partie supérieure dudit corps (9) au-dessus dudit piquage supérieur (7), et un segment métallique assurant l'étanchéité entre ledit corps et ledit bol, à un niveau situé entre les piquages inférieur (6) et supérieur (7),
   — il comporte une aiguille creuse (17) solidaire de façon étanche de ladite membrane (16) sortant en partie basse à travers ledit orifice calibré (10) et munie d'un orifice (20) situé en dessus de ladite membrane métallique (16), ladite aiguille creuse (17) se prolongeant vers le haut dans un dispositif (22, 26) permettant la mesure du déplacement de ladite aiguille (17), donc de la déformation de ladite membrane métallique (16).

2. Débitmètre pour liquides dangereux selon la revendication 1, caractérisé en ce que la membrane (16) est métallique, de forme ondulée et réalisée dans un matériau résistant à la corrosion et de préférence un zircalloy.

3. Débitmètre pour liquides dangereux selon l'une des revendications 1 ou 2, caractérisé en ce que l'aiguille (17) solidaire de la membrane (16) est fixée souplement à sa partie inférieure par des tiges métalliques précambrées (21).

4. Débitmètre pour liquides dangereux selon l'une quelconque des revendications précédentes, caractérisé en ce que les capteurs (26) sont extérieurs à la partie du débitmètre pouvant contenir du liquide et peuvent être démontés sans interrompre la circulation du liquide.

5. Débitmètre pour liquides dangereux selon l'une quelconque des revendications précédentes, caractérisé en ce que le bol (3) reste fixé sous la dalle (5) aux tuyauteries, alors que la partie intérieure (9, 24, 25, 28) peut être démontée verticalement sans interrompre le circuit du liquide.

6. Débitmètre pour liquides dangereux selon l'une quelconque des revendications précédentes, caractérisé en ce qu'une grille (15) perforée de trous multiples est placée entre l'orifice calibré (10) et la membrane (16).

7. Débitmètre pour liquides dangereux selon l'une quelconque des revendications précédentes, caractérisé en ce que l'étanchéité entre le bol (3) et le corps intérieur (9) est réalisée d'une part par un joint (13) métallique genre "Helicoflex" et d'autre part par un ou plusieurs segments métalliques (14).

8. Débitmètre pour liquides dangereux selon l'une quelconque des revendications précédentes, caractérisé en ce que la surface de l'orifice calibré (10) est une surface torique.

## Patentansprüche

1. Durchflußmesser für gefährliche Flüssigkeiten, der die Deformation unter Einfluß einer Druckdifferenz verwendet, hervorgerufen durch Fließen der Flüssigkeit, einer biegsamen Membran (16), wobei der Durchflußmesser unter einer Schutzplatte (5) angeordnet ist und dadurch gekennzeichnet ist, daß :

er einen Körper (9) von im allgemeinen zylindrischer Form aufweist, der in einem Behälter (3) angeordnet ist, der mit einer unteren Zufuhrrohrabzweigung (6) und einer oberen Auslaßrohrabzweigung (7) der Flüssigkeit versehen ist, wobei der Körper (9) eine kalibrierte Öffnung (10) an seiner Unterseite, eine Austrittsöffnung (11) an seinem oberen Seitenbereich aufweist, wobei die Membran (16) metallisch ist und im oberen Bereich des Körpers (9) oberhalb der oberen Rohrabzweigung (7) angeordnet ist, und ein metallisches Segment aufweist, das die Dichtheit zwischen dem Körper und dem Behälter auf einer Höhe zwischen der unteren (6) und oberen (7) Rohrabzweigung sicherstellt,
er eine hohle Nadel (17) aufweist, die auf dichtende Weise mit der Membran (16) verbunden ist, wobei sie im unteren Bereich durch die kalibrierte Öffnung (10) vorsteht und mit einer Öffnung (20) versehen ist, die oberhalb der metallischen Membran (16) angeordnet ist, wobei die hohle Nadel (17) sich nach oben in eine Vorrichtung (22, 26) verlängert, die die Messung der Bewegung der Nadel (17) und so die Deformation der metallischen Membran (16) erlaubt.

2. Durchflußmesser für gefährliche Flüssigkeiten nach Anspruch 1, **dadurch gekennzeichnet**, daß die Membran (16) metallisch, von gewellter Form und aus einem Material gebildet ist, das korrosionsbeständig ist und vorzugsweise ein Zirkaloy ist.

3. Durchflußmesser für gefährliche Flüssigkeiten nach Anspruch 1 oder 2, **dadurch gekennzeichnet**, daß die Nadel (17), die mit der Membran (16) verbunden ist, nachgiebig an ihrem unteren Bereich durch metallische vorgebogene Stangen (21) befestigt ist.

4. Durchflußmesser für gefährliche Flüssigkeiten nach einem der vorhergehenden Ansprüche, **dadurch gekennzeichnet**, daß die Aufnehmer (26) außerhalb des Bereichs des Durchflußmessers sind, der die Flüssigkeit enthalten kann und die entfernt werden können, ohne den Umlauf der Flüssigkeit zu unterbrechen.

5. Durchflußmesser für gefährliche Flüssigkeiten nach einem der vorhergehenden Ansprüche, **dadurch gekennzeichnet**, daß der Behälter (3) fest unter der Platte (5) mit den Rohrstücken bleibt, während der innere Bereich (19, 24, 25, 28) vertikal entfernt werden kann, ohne den Flüssigkeitsumlauf zu unterbrechen.

6. Durchflußmesser für gefährliche Flüssigkeiten nach einem der vorhergehenden Ansprüche, **dadurch gekennzeichnet**, daß ein mit einer Vielzahl von Löchern perforiertes Gitter (15) zwischen der kalibrierten Öffnung (10) und der Membran (16) angeordnet ist.

7. Durchflußmesser für gefährliche Flüssigkeiten nach einem der vorhergehenden Ansprüche, **dadurch gekennzeichnet**, daß die Dichtheit zwischen dem Behälter (3) und dem Innenkörper (9) einerseits durch eine metallische Dichte (13) von der Art "Helicoflex" und andererseits durch ein oder mehrere metallische Segmente (14) ausgebildet wird.

8. Durchflußmesser für gefährliche Flüssigkeiten nach einem der vorhergehenden Ansprüche, **dadurch gekennzeichnet**, daß die Oberfläche der kalibrierten Öffnung (10) eine torische Oberfläche ist.

## Claims

1. Flowmeter for dangerous liquids, using the deformation, under the effect of a pressure variation caused by the flow of said liquid, of a deformable diaphragm (16), said flowmeter being placed under a protective plate

5

(5), and characterized in that said flowmeter comprises :

— a body (9) of general cylindrical shape placed inside a bowl (3) equipped with a lower inlet connection piece (6) and an upper outlet connection piece (7) for the liquid, said body (9) having a calibrated orifice (10) on its lower face, an outlet orifice (11) in its upper lateral part, said diaphragm (16) being metallic and situated at the upper part of said body (9) above said upper connection piece (7), and a metallic segment achieving tightness between said body and said bowl, at a level situated between the lower (6) and upper (7) outlet connection pieces,

— and a hollow pin (17), joined in tight manner to said diaphragm (16) emerging at the lower part through said calibrated orifice (10), said pin being provided with an orifice (20) situated above said metallic diaphragm (16), and said hollow pin (17) extending upwardly in a device (22, 26) permitting the measurement of the displacement of said pin (17), hence the deformation of said metallic diaphragm (16).

2. Flowmeter for dangerous liquids according to claim 1, characterized in that the diaphragm (16) is metallic, of corrugated shape and produced in a corrosion-resistant material and preferably a zircalloy.

3. Flowmeter for dangerous liquids according to one of claims 1 or 2, characterized in that the pin (17) fast with the diaphragm (16) is fixed in flexible manner at its lower part by pre-bent metallic spokes (21).

4. Flowmeter for dangerous liquids according to any one of the preceding claims, characterized in that the sensors (26) are external to the part of the flowmeter which can contain the liquid and can be dismantled without the flow of the liquid being interrupted.

5. Flowmeter for dangerous liquids according to any one of the preceding claims, characterized in that the bowl (3) remains fixed to the conduits under the plate (5), while the inner part (9, 24, 25, 28) can be dismantled vertically without the flow of liquid being interrupted.

6. Flowmeter for dangerous liquids according to any one of the preceding claims, characterized in that a grid (15) perforated with multiple holes is placed between the calibrated orifice (10) and the diaphragm (16).

7. Flowmeter for dangerous liquids according to any one of the preceding claims, characterized in that tightness between the bowl (3) and the inner body (9) is achieved first by a "Helicoflex" type metallic joint (13) and second, by one or more metallic segments (14).

8. Flowmeter for dangerous liquids according to any one of the preceding claims, characterized in that the surface of the calibrated orifice (10) is a toric surface.

Fig-1

Fig-2